# EUROPÄISCHE PATENTSCHRIFT

(11) **EP 0 716 530 B1**
(45) Veröffentlichungstag und Bekanntmachung des Hinweises auf die Patenterteilung: **14.03.2001**
(21) Anmeldenummer: 95116886.3
(22) Anmeldetag: 26.10.1995
(51) Int. Cl.: H04M 1/11, H02B 1/44

(54) **Abschliessbares Apparategehäuse und Verwendung desselben für eine Telefonstation**
Lockable housing for an apparatus and its use for a telephone terminal
Boitier d'appareil fermant à clé et son utilisation pour un appareil téléphonique

(30) Priorität: 06.12.1994 CH 368794
(43) Veröffentlichungstag der Anmeldung: 12.06.1996
(73) Patentinhaber: IP-TPG HOLDCO S.a.r.l., 2763 Luxembourg (LU)
(72) Erfinder: Doucet, Joel, F-07130 Soyons (FR); Daumas, Guy, F-07300 Tournon (FR); Cocquempot, Pascal, F-26120 Montmeyran (FR)
(74) Vertreter: Müller, Hans-Jürgen, Dipl.-Ing.

(56) Entgegenhaltungen:
- EP-A- 0 121 220
- EP-A- 0 600 785
- GB-A- 2 179 500
- US-A- 5 061 023

## Beschreibung

Die Erfindung bezieht sich auf ein abschliessbares Apparategehäuse der im Oberbegriff des Anspruchs 1 genannten Art.

Solche abschliessbaren Apparategehäuse werden vorteilhaft zum Schutze kassierender Fernsprechstationen - sogenannter Payphones - verwendet, insbesondere der Fernsprechstationen, die eine Einrichtung zum Lesen vorbezahlter Wertkarten und/oder Kreditkarten aufweisen.

Es ist ein Apparategehäuse dieser Art bekannt (Münztelefon 23, Telekom Unterrichtsblätter-Fachzeitschrift der deutschen Telekom - 1/1994, Seite 7 .. 11), bei dem ein Gehäuseteil als schwenkbare Türe ausgebildet und durch Scharniere mit einer an einer Gebäudewand befestigbaren Rückwand verbunden ist. Zum Öffnen des Apparategehäuses ist der bewegliche Gehäuseteil seitlich von der Rückwand wegschwenkbar. Damit das Gehäuse vollständig geöffnet werden kann, ist auf einer Seite des Apparategehäuses relativ viel freier Platz erforderlich. Das Apparategehäuse ist deshalb nur bedingt in einer Ecke platzierbar.

Darüber hinaus ist ein abschließbares Apparategehäuse aus der US-A-5 061 023 bekannt. Dabei bildet die Rückwand einen kastenartigen Gehäuseteil, von dem unten ein wiederum kastenartiger Gehäuseteil vorsteht, auf dem die Haube verschwenkbar aufgesetzt ist und von dieser abgenommen werden kann. Die Abschwenkbewegung der Haube von der Rückwand wird durch ein Führungsaggregat gewährleistet, das aus zwei an den beiden unteren Haubenseiten angebrachten kreissegmentförmigen Schienen besteht.

Der Erfindung liegt die Aufgabe zugrunde, ein abschließbares Apparategehäuse dieser Gattung mit einfachen Mitteln sowohl konstruktiv zu verbessern als auch hinsichtlich des Raumbedarfs zu verkleinern.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Fernsprechstation mit einem verschliessbaren Apparategehäuse,
- Fig. 2: ein vertikal geschnittene Ausführung des Apparategehäuses,
- Fig. 3: eine horizontal geschnittene Ausführung des Apparategehäuse und
- Fig. 4: ein Detail einer Rückwand des Apparategehäuses.

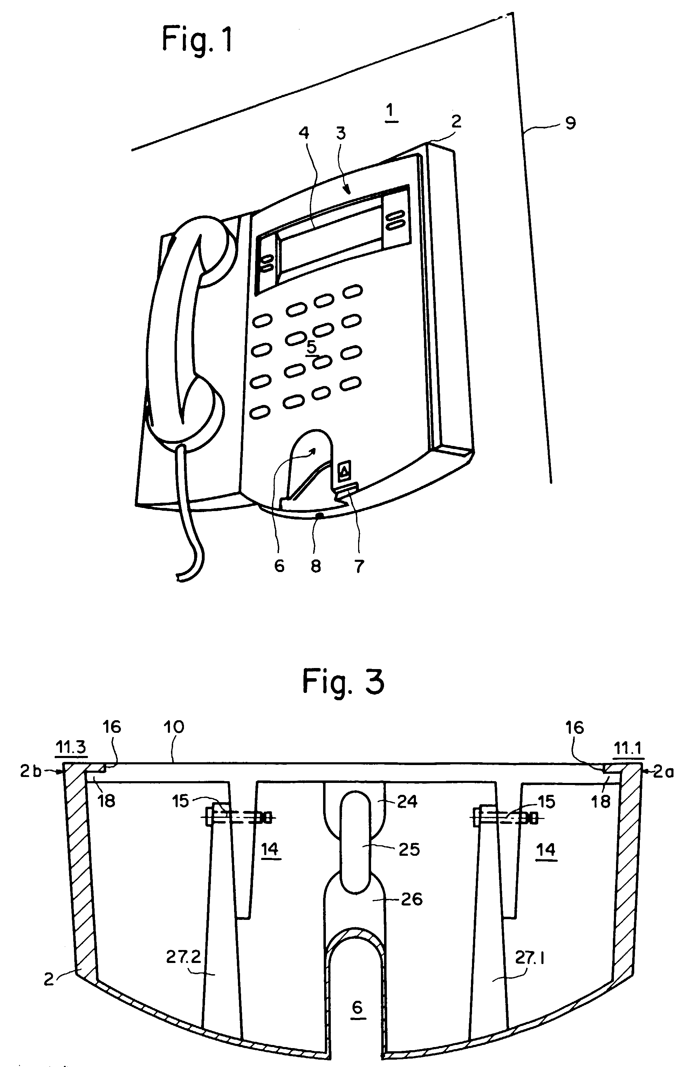

Gemäß Fig 1 gelöst das eine Haube 2 aufweisende Apparategehäuse 1 zu einer Telefonstation. Auf einer Frontseite 3 der Haube 2 sind eine Anzeigeeinheit 4 und eine Tastatur 5 angeordnet. Bei Bedarf weist die Haube 2 eine Einbuchtung 6 sowie einen mit Vorteil schlitzförmigen Einlass 7 für vorbezahlte Wertkarten, Kreditkarten oder Münzen auf. Im weiteren verfügt das Apparategehäuse 1 über ein Schlüsselloch 8. Das Gehäuse ist an einem festen Standort, mit Vorteil an einer Zimmer- oder Gebäudewand 9 montierbar.

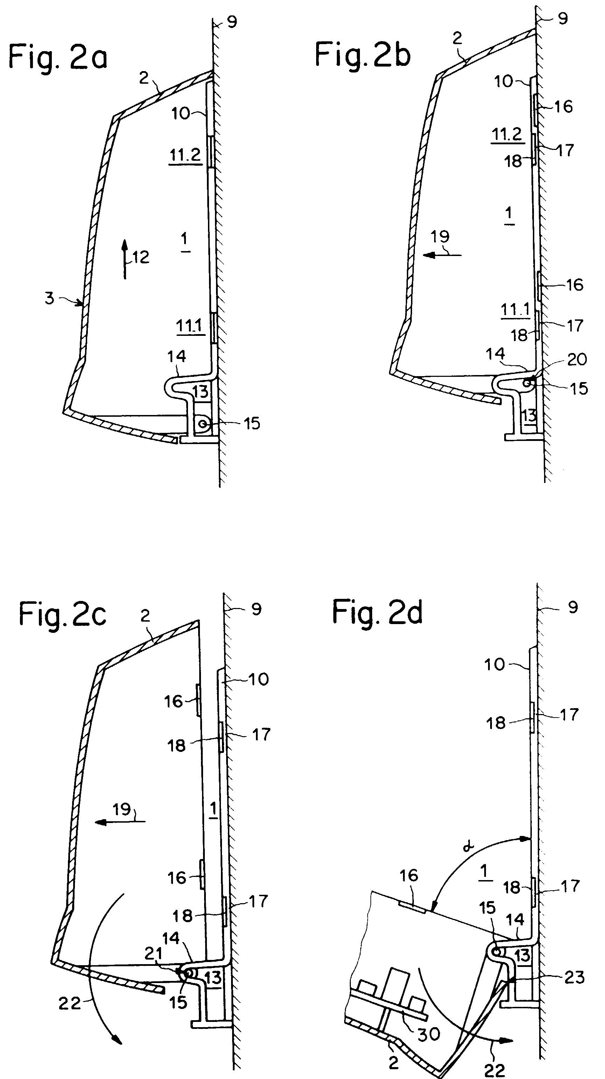

Eine in der Fig. 2 dargestellte vorteilhafte Ausführung des Apparategehäuses 1 weist weiter eine Rückwand 10 auf. Nocken-Nut-Verbindungen 11 sind ein vorteilhaftes Befestigungsmittel zur Befestigung der Haube 2 an der Rückwand 10.

In der Fig. 2a ist das Gehäuse 1 in einem geschlossenen Zustand dargestellt, wobei die Haube 2 durch eingreifende Nocken-Nut-Verbindungen 11.1 und 11.2 an der Rückwand 10 befestigt ist. Durch eine Translationsbewegung der Haube 2 in der Pfeilrichtung der Bewegung 12 sind die Nocken-Nut-Verbindungen 11.1 und 11.2 lösbar

Ferner weist das Gehäuse 1 ein weiteres Befestigungsmittel 13 auf das prinzipiell durch ein Führungsmittel 14 und eine vom Führungsmittel 14 gefangene und führbare Schwenkachse bzw. Angel 15 verwirklicht ist. Mit Vorteil weist das Gehäuse 1 mindestens zwei Exemplare des Führungsmittels 14 und auch mindestens zwei zueinander axial angeordnete Exemplare der Angel 15 auf. Das weitere Befestigungsmittel 13 ist derart gestaltet, dass die Translationsbewegung der Haube 2 mindestens in der Pfeilrichtung der Bewegung 12 durch das Befestigungsmittel 13 begrenzt ist, wobei zwar die Nocken-Nut-Verbindungen 11.1 und 11.2 gelöst, nicht aber die Haube 2 vollständig von der Rückwand 10 befreit werden kann.

In der Fig. 2b sind die gelösten Nocken-Nut-Verbindungen 11.1 und 11.2 mit dem Nocken 16 und einer hinter einer Zunge 18 ausgebildeten Nut 17 dargestellt. Wenn die Nocken-Nut-Verbindungen 11.1 und 11.2 gelöst sind, ist die Haube 2 durch eine Bewegung 19 in der Richtung des zweiten Pfeiles so weit von der Rückwand 10 abhebbar, bis diese Bewegung durch das weitere Befestigungsmittel 13 an einem äusseren Anschlag 21 begrenzt wird.

In der Fig. 2c ist die von der Rückwand 10 abgehobene Haube 2 dargestellt, wobei die durch das Führungsmittel 14 im äusseren Anschlag 21 gefangene Angel 15 ein weitergehendes Abheben der Haube 2 parallel zur Rückwand 10 in der Richtung des Pfeiles 19 verhindert, eine Drehung um die Angel 15 jedoch zulässt. Das Gehäuse 1 mit der abgehobenen Haube 2 lässt sich weiter öffnen, indem die Haube 2 in der Drehrichtung 22 eines dritten Pfeiles um die Angel 15 geschwenkt wird.

In der Fig. 2 d ist das Gehäuse 1 in einem vollständig geöffneten Zustand dargestellt. Die Haube 2 ist in der Drehrichtung 22 so weit schwenkbar, bis ein Teil der Haube 2 einen bestimmten Anschlagpunkt 23 erreicht. Der Anschlagpunkt 23 ist vorteilhaft so festgelegt, dass zwischen der Rückwand 10 und dem Rand der Haube 2 ein für Servicearbeiten im Innenraum des Gehäuses 1 ausreichend grosser Öffnungswinkel a erzielt wird. Auch im vollständig geöffneten Zustand des Gehäuses 1 bleibt die Haube 2 vorteilhafterweise über die im Führungsmittel 14 im äusseren Anschlag 21 gefangene Angel 15 mit der Rückwand 10 verbunden.

Mit Vorteil ist das Apparategehäuse 1 so positioniert, dass die die Nocken-Nut-Verbindungen 11.1 und 11.2 lösende Translationsbewegung entgegen der Wirkrichtung der Schwerkraft, also mit einem wesentlichen Richtungsanteil vertikal nach oben, erfolgt. Die auf die Haube 2 wirkende Schwerkraft wirkt sich beim Öffnen des Gehäuses 1 vorteilhaft aus, wenn die Schwenkbewegung in der Drehrichtung des dritten Pfeiles 22 (Fig. 2c) den Schwerpunkt der abgehobenen Haube 2 von oben nach unten verschiebt, was vorteilhafterweise eine stabile Endlage der Haube 2 im vollständig geöffneten Zustand (Fig. 2d) des Gehäuses 1 bewirkt.

Es versteht sich von selbst, dass die vorteilhaften Nocken-Nut-Verbindungen 11 in einer Variante auch verwirklichbar sind, wenn an der Haube 2 Nuten und an der Rückwand 10 Nocken ausgebildet werden.

Die in den Fig. 2a bis 2d dargestellte vorteilhafte Ausführungsform des Führungsmittels 14 umschliesst eine Aussparung, in der die Angel 15 gefangen ist. Die Aussparung weist prinzipiell zwei Führungsbahnen auf: Eine erste Führungsbahn begrenzt die Bewegungen 12 der Haube 2 (Fig. 2a). Eine zweite Führungsbahn verläuft von einem oberen Anschlag 20 (Fig. 2b) geradlinig zum äusseren Anschlag 21 (Fig. 2c) wobei die beiden Führungsbahnen im oberen Anschlag 20 (Fig 2b) mit Vorteil etwa rechtwinklig aufeinanderstehen.

Das Führungsmittel 14 ist in zwei Exemplaren als Bügel ausgeführt, wobei ein Bügel mit Vorteil ein Teil der Rückwand 10 ist, während die Angel 15 an der Haube 2 angeordnet ist. Es versteht sich von selbst, dass in einer weiteren Variante des Apparategehäuses 1 das Führungsmittel 14 an der Haube 2 verwirklichbar ist.

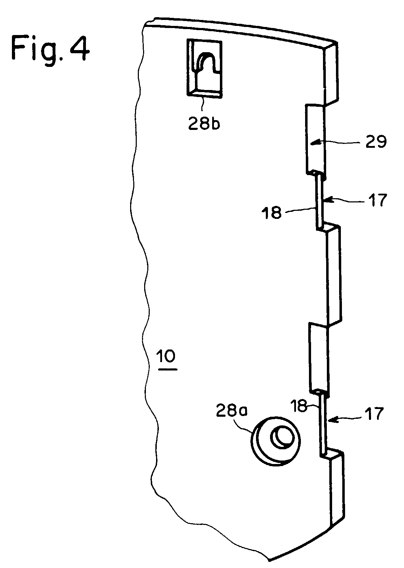

In der Fig. 3 sind an den Rändern von zwei einander gegenüberliegenden Seiten 2a bzw. 2b der Haube 2 die Nocken-Nut-Verbindungen 11.1 bzw. 11.3 dargestellt. Die Rückwand 10 ist durch die Haube 2 mit den beiden Seiten 2a und 2b sowie mit einer weiteren Seite einfassbar und gut abdeckbar.

Ein Schloss 24 weist einen verschiebbaren Riegel 25 auf, der mit einem in das Schlüsselloch 8 (Fig. 1) einführbaren Schlüssel so über einen Absatz 26 schiebbar ist, dass die die Nocken-Nut-Verbindungen 11 lösende Translationsbewegung blockierbar bzw. das Gehäuse 1 abschliessbar ist. Mit Vorteil ist der Absatz 26 an der Haube 2 ausgebildet, und das Schloss 24 mit der Rückwand 10 verankert. Die beiden axial zueinander angeordneten Exemplare der Angel 15 sind über Stützen 27.1 und 27.2 mit der Haube 2 verbunden.

In der Fig. 4 sind Löcher zur Befestigung der Rückwand 10 an der Zimmer- oder Gebäudewand 9 (Fig. 1) mit 28a bzw. 28b bezeichnet. Eine Aussparung 29 für den Nocken 16 (Fig. 2c) ist neben der Zunge 18 ausgebildet, wodurch das Lösen der Nocken-Nut-Verbindungen 11 und das Abheben der Haube 2 ermöglicht sind.

Die Haube 2 und die Rückwand 10 sind in grossen Stückzahlen kostengünstig durch Giessverfahren aus einer Leichmetallegierung oder aus Kunststoff herstellbar, wobei das Führungsmittel 14 direkt mit der Rückwand 10 bzw. der Haube 2 giessbar ist.

Dadurch, dass das Apparategehäuse 1 die mit den Befestigungsmitteln 11 und 13 an der Rückwand 10 befestigbare Haube 2 aufweist, welche zum Öffnen des Apparategehäuses 1 von der Zimmer- oder Gebäudewand 9 weg nach vorne und nach unten wegschwenkbar ist, ist zum Öffnen des Apparategehäuses 1 seitlich vom Apparategehäuse kein Platz erforderlich. Weiter ist auch der Innenraum eines in einer Zimmerecke montierten Exemplares des Apparategehäuses 1 für Servicearbeiten leicht zugänglich. Die durch das Apparategehäuse 1 verdeckten Befestigungsmittel 11 und 13 bieten hohe Sicherheit gegen ein gewaltsames Öffnen.

Im vollständig geöffneten Zustand des Apparategehäuses 1 (Fig. 2d) ist eine in der Haube 2 angeordnete Leiterplatte 30 für Servicearbeiten gut zugänglich. Mit Vorteil ist die Leiterplatte 30 die einzige Leiterplatte einer Telefonstation. Dadurch dass die Leiterplatte 30 in der der Haube 2 angeordnet ist, sind elektrische Verbindungen zur Anzeigeeinheit 4 (Fig. 1) und zur Tastatur 5 kostengünstig realisierbar.

## Patentansprüche

1. Abschließbares Apparategehäuse (1) mit einem bei geschlossenem Gehäuse (1) im wesentlichen von einer Rückwand (10) und einer Haube (2) begrenzten Innenraum, bei dem die Haube (2) durch Befestigungsmittel an der Rückwand (10) befestigbar ist, welche mehrere, mindestens auf zwei zueinander parallelen Seiten (2a; 2b) des Gehäuses (1) auf der Haube (2) und auf der Rückwand (10) verteilte Nocken-Nut-Verbindungen (11), die durch eine Translationsbewegung der Haube (2) in Bezug zur Rückwand (10) lösbar sind, sowie mindestens ein weiteres Befestigungsmittel (13) aufweisen, das eine Schwenkbewegung der Haube (2) in Bezug zur Rückwand (10) um einen Schwenk- bzw. Drehwinkel (α) gestattet,
**dadurch gekennzeichnet,**
daß das weitere Befestigungsmittel (13) mindestens eine bewegbare Schwenkachse bzw. Angel (15) und mindestens ein Führungsmittel (14) zur Führung der Bewegung der Schwenkachse bzw. Angel (15) umfaßt, daß die Schwenkachse bzw. Angel (15) Teil der Haube (2) und das Führungsmittel (14) Teil der Rückwand (10) oder umgekehrt sind, daß das Führungsmittel (14) zwei Führungsbahnen zum gefangenen Führen beim Bewegen der Schwenkachse bzw. Angel (15) bis zu Anschlägen (20,21) aufweist, sowie zum Schwenken der Haube (2) um die in einen der Anschläge (21) verschobene Schwenkachse bzw. Angel (15) ausgebildet ist und daß die erste Führungsbahn die Translationsbewegung (12) zum Lösen der Nocken-Nut-Verbindung (11) und die zweite Führungsbahn eine Bewegung (19) von der Rückwand (10) hinweg bis zu dem die Schwenkbewegung der Haube um die verschobene Schwenkachse bzw. Angel ermöglichenden äußeren Anschlag (21) erlauben.

2. Apparategehäuse nach Anspruch 1,
**dadurch gekennzeichnet,**
daß die zweite Führungsbahn von einem der Anschläge (20) zum äußeren Anschlag (21) geradlinig verläuft.

3. Apparategehäuse nach Anspruch 1 oder 2,
**dadurch gekennzeichnet,**
daß die beiden Führungsbahnen etwa rechtwinklig zueinander verlaufen.

4. Apparategehäuse nach einem vorangehenden Anspruch,
**dadurch gekennzeichnet,**
daß die die Nocken-Nut-Verbindungen (11) lösende Translationsbewegung einen wesentlichen Richtungsanteil vertikal nach oben enthält.

5. Apparategehäuse nach Anspruch 4,
**dadurch gekennzeichnet,**
daß das Führungsmittel (14) derart im Gehäuse (1) angeordnet ist, daß die abgehobene Haube (2) eine Schwenkbewegung von der Rückwand (19) so nach vorne und unten aufweist, daß sich der Schwerpunkt der abgehobenen Haube (2) dabei im wesentlichen von oben nach unten verlagert.

6. Apparategehäuse nach einem vorangehenden Anspruch,
**dadurch gekennzeichnet,**
daß das Führungsmittel (14) durch zwei je eine Aussparung für die Schwenkachse bzw. Angel (15) aufweisende Bügel verwirklicht ist.

7. Apparategehäuse nach einem vorangehenden Anspruch,
**dadurch gekennzeichnet,**
daß die Befestigungsmittel (13) im Innenraum so angeordnet sind, daß sie durch die Haube (2) verdeckt sind.

8. Apparategehäuse nach einem der vorangehenden Ansprüche,
**gekennzeichnet durch,**
ein Schloss (24) mit einem durch einen Schlüssel betätigbaren Riegel (25) zum Blockieren der zum Lösen der Nocken-Nut-Verbindungen (11) erforderlichen Translationsbewegung der Haube (2) gegenüber der Rückwand (3).

9. Apparategehäuse nach einem vorangehenden Anspruch,
**dadurch gekennzeichnet,**
daß die Haube (2) auf der Frontseite (3) eine Einbuchtung (6) mit einem schlitzförmigen Einlass (7) für Wertkarten, Kreditkarten oder Münzen aufweist.

10. Verwendung des Apparategehäuses nach einem vorangehenden Anspruch für eine Telefonstation mit der Maßgabe, daß auf der Frontseite (3) der Haube (2) eine Tastatur (5) und eine Anzeigeeinheit (4) angeordnet sind, daß der Innenraum eine an der Haube (2) befestigte Leiterplatte (30) der Telefonstation aufweist und daß die Leiterplatte (30) mittels elektrischer Verbindungen mit der Tastatur (5) und der Anzeigeeinheit (4) verbunden ist.

## Claims

1. A Mounting device for the housing (1) of an apparatus consisting of an interior chamber delimited by a case (1) with a back panel (10) and a front cover (2), in which the front cover (2) is attached by a device on the back panel (10), which has several bolt-notch joints (11) situated on at least two parallel sides (2a; 2b) of the case (1), on the front cover (2) and on the back panel (10), in which the bolt-notch joints (11) can be taken apart by sliding the front cover (2) in relation to the back panel (10), and in which an extra fixing device (13) allows a rotation of the front cover (2) in relation to the back panel (10) with a pivot angle and/or rotation angle (α),
**characterized by**
- the fact that the extra fixing device (13) consists of at least one mobile rotational axe and/or a hinge (15) and at least one guide bearing (14) to guide the movement of the rotational axe and/or of the hinge (15),
- that the rotational axe and/or the hinge (15) is an integral part of the front cover (2) and that the guide bearing (14) is an integral part of the back panel (10) or vice versa,
- that the guide bearing (14) is made up of two guiding rails for the secure guiding of the rotational axe and/or hinge (15) up to the stoppers (20, 21),
- that the rotational axe and/or the hinge (15) is carried to rotate the front cover (2) around the outermost stopper (21),
- and in the way that the first guiding rail allows the sliding movement (12) in order to disengage the bolt-notch joints (11) and the second guiding rail allows a motion (19) from the back panel (10) up to the exterior stopper (21) and makes the rotational movement of the front cover (2) around the rotational axe and/or hinge (15) possible.

2. Device according to the patent claim number 1,
**characterized by**
- the second guiding rail, which points in a rectilinear manner from the innermost stopper (20) to the outermost stopper (21).

3. Device according to the patent claims 1 or 2,
**characterized by**
- the positioning of the two guiding rails which are directed towards each other at approximately a right angle.

4. Device according to the above patent claims,
**characterized by**
- the manner that the sliding movement which disengages the bolt-notch joints (11) consists of a directing component largely vertical and pointed towards the top.

5. Device according to the fourth patent claim,
**characterized by**
- the disposition of the guide bearing (14) in the case (1) in such a way that the uplifted front cover (2) executes a rotational movement from the back panel (10) outwards and downwards, and due to this movement the center of gravity of the uplifted front cover (2) moves mainly downwards.

6. Device according to the above patent claims,
**characterized by**
- the production of the guide bearing (14) by means of two circuits which both allow a movement area for the rotational axe and/or the hinge (15).

7. Device according to the above patent claims,
**characterized by**
- the fact that the fixing devices (13) are placed inside the interior chamber in such a manner as to be covered by the front cover (2).

8. Device according to the above patent claims,
**characterized by**
- the presence of a locking device (24), with a bolt (25) operated by a key, used to block the sliding movement of the front cover (2) in relation to the back panel (10) necessary for the unlocking of the bolt-notch joints (11).

9. Device according to the above patent claims,
**characterized by**
- the fact that the front cover (2) in the front part (3) has an opening (6) with a slot entry for credit cards, recharge cards or coins.

10. Use of a device according to the above patent claims in a telephone booth insofar as the front part of the front cover (2) has a push button number pad (5) and an indicator device (4), that the interior chamber disposes of a plaque (30) attached to the front cover (2) and that the plaque (30) is linked by means of electrical connection equipment with the push button number pad (5) and the indicator device (4).

## Revendications

1. Dispositif de fixation d'un boîtier d'appareil (1) composé d'un espace intérieur limité principalement par un boîtier (1) fermé par un panneau arrière (10) et un capot (2), dans lequel le capot (2) est fixé à l'aide d'un moyen de fixation sur le panneau arrière (10), qui présente plusieurs assemblages ergot-encoche (11) distribués au moins sur deux côtés (2a; 2b) du boîtier (1) parallèles entre eux, sur le capot (2) et sur le panneau arrière (10), lesquels peuvent être désassemblés à l'aide d'un mouvement de translation du capot (2) par rapport au panneau arrière (10), ainsi qu'au moins un moyen de fixation supplémentaire (13) qui permet un mouvement de rotation du capot (2) par rapport au panneau arrière (10) avec un angle de pivotement et/ou de rotation (α),
**caractérisé par**
ce que le moyen de fixation supplémentaire (13) comprend au moins un axe de rotation mobile et/ou un gond (15) et au moins un système de guidage (14) pour le guidage du mouvement de l'axe de rotation et/ou du gond (15), que l'axe de rotation et/ou le gond (15) fait partie du capot (2) et le système de guidage (14) fait partie du panneau arrière (10) ou inversement, que le système de guidage (14) présente deux glissières de guidage pour les guides lors du mouvement de l'axe de rotation et/ou du gond (15) jusqu'aux butées (20, 21), que l'axe de rotation et/ou le gond (15) est déporté pour effectuer la rotation du capot (2) autour d'une des butées (21) et que la première glissière de guidage permet le mouvement de translation (12) pour désassembler les assemblages ergot-encoche (11) et la deuxième glissière de guidage permet un mouvement (19) depuis le panneau arrière (10) jusqu'à la butée externe (21) et rend possible le mouvement de rotation du capot (2) autour de l'axe de rotation et/ou du gond (15).

2. Dispositif selon la revendication 1,
**caractérisé par**
ce que la deuxième glissière de guidage conduit de manière rectiligne d'une des butées (20) à la butée externe (21).

3. Dispositif selon les revendications 1 ou 2,
**caractérisé par**
ce que les deux glissières de guidage conduisent l'une vers l'autre approximativement à angle droit.

4. Dispositif selon une des revendications précédentes,
**caractérisé par**
ce que le mouvement de translation qui désassemble les assemblages ergot-encoche (11) comprend une partie directionnelle essentiellement verticale et dirigée vers le haut.

5. Dispositif selon la revendication 4,
**caractérisé par**
ce que le système de guidage (14) est disposé dans le boîtier (1) de telle manière que le capot (2) soulevé effectue un mouvement de rotation depuis le panneau arrière (10) vers le devant et vers le bas, et que le centre de gravité du capot (2) soulevé se déplace essentiellement depuis le haut vers le bas.

6. Dispositif selon une des revendications précédentes,
**caractérisé par**
ce que le système de guidage (14) est réalisé au moyen de deux boucles qui présentent chacune un dégagement pour l'axe de rotation et/ou le gond (15).

7. Dispositif selon une des revendications précédentes,
**caractérisé par**
ce que les moyens de fixation (13) sont placés dans l'espace intérieur de telle manière qu'ils sont couverts par le capot (2).

8. Dispositif selon une des revendications précédentes,
**caractérisé par**
ce qu'une serrure (24), avec un verrou (25) actionné par une clé, est utilisée pour bloquer le mouvement de translation du capot (2) par rapport au panneau arrière (10) nécessaire au désassemblage des assemblages ergot-encoche (11).

9. Dispositif selon une des revendications précédentes,
**caractérisé par**
ce que le capot (2) présente dans sa partie frontale (3) une ouverture (6) avec un orifice d'entrée en forme de rainure pour les cartes à mémoire, les cartes de crédit ou pour les pièces de monnaie.

10. Utilisation d'un dispositif selon une des revendications précédentes pour une cabine téléphonique dans la mesure que dans la partie frontale du capot (2) sont disposés un clavier (5) et un dispositif indicateur (4), que l'espace intérieur présente une plaquette (30) fixée au capot (2) et que la plaquette (30) est raccordée au moyen de raccords électriques avec le clavier (5) et le dispositif indicateur (4).
